# EUROPEAN PATENT APPLICATION

(11) **EP 4 487 992 A1**
(43) Date of publication of application: **08.01.2025**
(21) Application number: 22886203.3
(22) Date of filing: 25.10.2022
(51) Int. Cl.: B23Q 3/155, F16M 13/04, A45F 5/00, A63B 29/08

(54) **QUICK-OPENING PORTABLE SUPPORT FOR HOUSING TOOLS, GADGETS OR OBJECTS**

(30) Priority: 26.10.2021 ES 202131007
(71) Applicant: González Pacín, Sebastián Pablo, 25650 ALCOLETCHE (LLEIDA) (ES)
(72) Inventor: González Pacín, Sebastián Pablo, 25650 ALCOLETCHE (LLEIDA) (ES)
(86) International application number: PCT/ES2022/070692
(87) International publication number: WO 2023/073269

(57) **Abstract**

The present invention discloses a quick-opening portable support for housing tools, gadgets or objects that secures an object (A) in a position where it can only be released by exerting a force on same that is generally opposite to the force of gravity, said force being transmitted not by the hand of the user, but by the same object to be extracted. Said support (1) comprises an external casing (2) intended to directly or indirectly house a segment of said object (A), which is immobilized in its position, and a releasing mechanism that controls the rotary, linear, circular or pivoting movement of a closing part or safety lock of the assembly, said mechanism being activated by the pressure that is exerted upon the object, said indirect pressure being translated into force and transmitted to said releasing mechanism by the same object.

## Description

### Object of the Invention

The present invention relates to a quick-opening portable support for housing tools, gadgets or objects that, due to its technical characteristics and configuration, significantly improves the use of similar articles currently available in the market and in the current state of the art.

Specifically, this quick-opening support is designed to house, transport, and make various manual tools, utensils, or objects easily accessible by hand. It addresses the need for quick and intuitive handling, allowing the user to grasp the tools directly with the hand in their ready-to-use position and return them to their housing in the same manner. Additionally, it is a portable support that can be attached to other means such as a safety harness, a shelf, a wall, etc.

### Technical Field

The technical field of this invention corresponds to various industrial techniques, particularly mobile supports for objects or pieces.

### State of the Art

In certain circumstances, quickly and precisely grabbing certain manual tools or objects requires notable speed, precision, and skill to immediately meet the needs of their use, upon which the correct outcome of the action depends.

One sector where this need is particularly evident is in height-related activities such as climbing and mountaineering, whether practiced as a sport or in a professional capacity, such as with rescue teams. In these cases, having tools, utensils, and objects such as pitons, carabiners, magnesium bags, multitools, climbing belays, flashlights, etc., readily available is an obvious necessity. It is essential to have them arranged in a convenient, secure, and easily accessible location to facilitate access to the tools in challenging and often immediate, blind, and intuitive situations.

These tools and objects are typically carried in a backpack, clothing pockets, and, for more frequently used items, attached to a climbing harness or belt for quick access. However, a recurring problem is the difficulty of grabbing them, specifically grabbing them in the ready-to-use position without having to manipulate or rotate them for use. This presents a risk of accidental falls resulting in the loss of the tool.

In the field of industrial property, various patents propose solutions to the mentioned problem. For example, patent ES1617135 describes a safety harness belt with tool-holding rings, including a plurality of tool-holding rings along the circumference of the belt with variable positions and without the risk of variation. Meanwhile, European patent ES2085451 describes a magnetic tool holder to *"facilitate the proper temporary storage* of a *tool, such* as a *tape measure, providing self-alignment and easy one-handed use without visual observation of the storage device.* (...) *It provides a magnetic tool holder for mounting a tool on* a *base with a receptacle, placing the tool relative to the base, a flat magnet, and* a *holding piece, in which the magnet and the receptacle are mounted on the base, and the holding piece on the tool or the holding piece and the receptacle on the base and the magnet on the tool. "*

While these proposed technical solutions are functional and meet their objectives, they have limitations. One does not solve the problem of intuitively grabbing a tool with a single motion and already in the ready-to-use position, and the other does not accommodate non-magnetic items.

Additionally, beyond the described mountaineering and climbing activity, there are other work fields where the pressure and speed of grabbing tools or objects already in the optimal position for use are necessary, such as in medicine, laboratories, or high-altitude work.

The applicant is not aware of any support for housing and transporting manual tools, utensils, or objects that contains the technical features presented in this patent.

### Object of the Invention

This invention relates to a portable Quick-opening portable support for housing tools, gadgets or objects that, due to their need and manner of use, require being quickly and safely extracted from such housing. The tool, utensil, or object is already positioned for use, eliminating the need for the user to manipulate it before use.

Note that, for the sake of clarity in the description, the term "object" is understood to encompass the concepts of tools and utensils.

The technical solution presented involves a support that secures an object in a housing that can only be released or extracted by exerting force on the support. This force is typically in the opposite or reverse direction to gravity and is transmitted not by the user's hand but by the object itself. Furthermore, this force is generally opposite to the direction of the user's movement.

For a better understanding of the invention, it is important to note that the object is partially housed in the support, allowing a part of it to remain accessible for manual gripping by the user. In other words, a portion of the object is inside the support, and another portion is outside.

This quick-opening support comprises at least a housing intended to directly or indirectly house a section of the object. The section is immobilized in the housing in a predetermined position. It also includes a mechanism controlling the rotational, linear, circular, or pivotal movement of a locking or securing piece within the assembly. This mechanism is activated by the pressure exerted on the object when held and pushed, at which point the pressure, translated into force, is transmitted to the support mechanism that acts on the lock designed to secure the object. This indirect force on the lock or securing mechanism retains the object.

In a preferred embodiment, the support operates with an automatic system. The housing indirectly houses the object within a hollow cylindrical body serving as an internal chamber. A section of the object, morphologically suitable, is placed in this chamber, which includes a release mechanism for the lock. The object always protrudes from the internal chamber, meaning only a part of the object is housed in the internal chamber.

Structurally, the internal chamber has a tubular shape, open at both ends, and its perimeter wall is open with a longitudinal cut or opening. Additionally, this perimeter wall has at least one spiral through-slot with discontinuous segments forming arched sections with their curves facing each other, creating at least one locking tooth as an extension of the slot. This tooth does not protrude beyond the perimeter of the internal chamber, neither inward nor outward. The perimeter wall also features outward-facing toothed protrusions. This chamber, serving as the housing for a section of the object immobilized in its position, has mobility to perform a rotational movement inside the external housing or container.

Structurally, the external housing is formed by a box-like structure with a tubular interior cavity, both the housing and cavity being partially open at both ends. It also has a longitudinal cut or opening in its perimeter wall. The internal perimeter wall has several continuous spiral through-slots, some for accommodating the toothed protrusions of the internal chamber, and another slot forming an element like a strip or leg that, at its free end, has an outward-facing tab directed toward the interior of the circular perimeter.

The access or door that allows extracting or inserting the object is constituted by the alignment of the openings or longitudinal cuts of the external housing and the internal chamber. This alignment is achieved with a support release mechanism in which the upward rotating movement performed by the internal chamber inside the external housing intervenes. This upward rotating movement results from a force opposing or inverse to gravity transmitted by the object to be extracted, without the subject touching the housing and chamber assembly at any time.

Depending on the configuration of the support and/or the object itself, this force may optionally and exceptionally be in favor of gravity or in other directions in alternative embodiments.

In this rotary movement, the protruding tab directed towards the interior of the circular perimeter of the external housing articulates with the discontinuous groove of the internal chamber. This relationship between the tab and the discontinuous groove causes the locking of the assembly, which remains open as they engage with each other.

As a result, the object is released and can be extracted, leaving the assembly open to reintroduce the object into it. The extraction of the object is achieved by holding it with the hand and pushing it to lift it, thus avoiding further accidental falls. This open position is maintained thanks to the actuation mechanism of the assembly.

If the internal chamber continues to be pressed, the push from a driving mechanism present in its structure, which includes an elastic element or spring, forces the internal chamber to return to its initial position in a downward rotary movement, automatically closing the housing and trapping the object again if it has been partially placed back in its original position inside the internal chamber.

That is, by exerting an upward force, the support opens until reaching the point at which the object is released, with the openings of the external casing and the internal chamber coinciding. Once the casing is opened, if pressure continues and this point is exceeded, the mechanism is released and the support is closed again, with the longitudinal openings of the external casing and the internal chamber not coinciding.

Therefore, the rotary movement of the release mechanism is bidirectional, upward and downward, for opening the support in one direction and closing it in the opposite direction.

It is, therefore, an automatic system in both the opening and closing of the support, in which the subject does not manipulate or touch the support. Instead, the action of taking the object implies its opening by transmitting pressure for the internal chamber to execute an upward rotary movement, and the same action of placing the object back in its original location triggers the downward rotary movement of the internal chamber, closing it.

In a second embodiment, the support operates with a semi-automatic system in which the housing directly accommodates the object. Optionally, this housing may indirectly accommodate the object by incorporating an internal chamber that contains it. In any case, the object is equally immobilized in its position, and the support also includes a release mechanism that acts on a closing element like a door that moves linearly, circularly, or pivotally, with automatic opening thanks to the release mechanism and manual closing.

The support is designed as a smaller piece for use in confined spaces, also effective for transporting large tools.

In the opening of the housing and in the release of the object, a triggering or releasing mechanism intervenes in various embodiments, acting to propel the opening of the housing through mechanical systems, whether automatic and elastic like at least a spring, a strip, a spherical ring or elliptical in shape, a corrugated sheet, a cord, or even at least one plastic extension with an inclined leg shape, or manual systems like at least a wedge, a handle, etc. In any case, the opening system is counteracted by a latch that holds it in the closed position, with this latch being part of the triggering mechanism.

In this embodiment, it is, therefore, a quick-opening support with a semi-automatic system, since to extract or release the object, the housing incorporates the triggering mechanism that is activated by the pressure exerted by the subject on the object. That is, the opening of the door is the result of this pressure, without the need to be manipulated by the subject. However, the closing of the support is manual, as the subject must place the closing element or door in its initial closed position.

Both the housing door and the triggering mechanism releasing it from its lock can be located in any area of the housing-front, back, side, bottom-in the safest position to prevent accidental opening of the door and/or accidental actuation of the triggering mechanism, depending on the needs arising from each use.

Regarding the locking or latches of the door closing the housing, they also have various embodiments that do not alter the operation of the quick-opening support claimed. Within this diversity, mention may be made of a wedge, hook, serrated projection, etc.

It is important to note that in both the automatic and semi-automatic systems, the housing, externally, can adopt any geometric shape (circular, square, etc.) according to the needs of the environment in which the claimed support will be used. It can also incorporate, at any point on its outer perimeter, preferably opposite to the one corresponding to the object to be held, means that allow its attachment to a specific point, such as a climbing harness, a worker's belt, a laboratory shelf, etc.

It is also fundamental to emphasize that in the automatic model-which consists of an external housing and an internal chamber that becomes the object-holding space-this internal chamber is always circular in shape, performing a rotational movement, i.e., in the form of threading, inside the external housing. This movement concludes with the opening or closing of the support. In contrast, in the semi-automatic model, in which the support is basically the external housing with an internal space intended to hold the object to be held, this internal space can be shaped according to the morphology of the object, not being limited in any way to a circular or any other shape. This feature is particularly important as it allows greater versatility and a smaller size of the support.

In any of the described models, it is worth noting again that when it is indicated that the object is housed in the support, whether in the external housing or in the internal chamber, it is partially housed, i.e., only a part of the object, according to its morphology, is trapped by the claimed support, with the rest of it accessible to be picked up by the subject.

In summary, it is noteworthy that both in the automatic system and in the semi-automatic system, the opening of the support is activated by the previous pressure exerted when pulling the object, which affects the release mechanism, be it the internal chamber that starts its upward rotary journey, automatic means such as elastic or spring-loaded mechanisms, or, in the case of manual systems, those that move linearly or circularly. The basic difference in operation between the two is that in the automatic system, the closing occurs by continuing to exert pressure without manipulating the support, while in the semi-automatic system, the closing results from direct manual manipulation of the support.

### Description of the Drawings

To facilitate the understanding of the claimed innovation, a sheet with drawings is attached. These drawings should be analysed and considered solely as an example and without any limiting or restrictive character.

Figures 3 to 25 show the support in its automatic system version, understood as the preferred embodiment, and figures 26 to 47 show the support in its semi-automatic system version, understood as a second embodiment.
Figure 1.- Perspective view of the quick-opening support in an example of use with a climbing cam for comparison in traditional transport with respect to the innovative transport that the new support claims.
Figure 2. Detailed view of the climbing cam according to Figure 1
Figure 3.- Perspective view of the support in the closed position
Figure 4.- Perspective view of the support in the open position
Figure 5.- Detailed view of the operation and travel of the object release mechanism in the closed position
Figure 6.- Detailed view of the operation and travel of the object release mechanism in the open position
Figure 7.- Detailed view of the operation and travel of the object release mechanism in the closed position
Figure 8.- Detailed view of the operation and travel of the object release mechanism in the open position
Figure 9.- Detailed view of the operation and travel of the object release mechanism in the closed position
Figure 10.- Detailed view of the operation and travel of the object release mechanism in the open position
Figure 11.- Exploded view of the support with automatic system
Figure 12.- Perspective view of the support in the closed position
Figure 13.- Detailed cut of the support and its release mechanism in the closed position
Figure 14.- Detailed cut of the support and its release mechanism in the open position
Figure 15.- Detailed view of the continuous slots and the tab of the external housing
Figure 16- Detailed view of the discontinuous groove and the serrated projections of the internal chamber
Figure 17.- Detail of the locking system of the travel of the internal chamber with the driving spring
Figure 18.- Detail of the locking system of the travel of the internal chamber with the driving spring
Figure 19.- Detail of the discontinuous groove of the internal chamber and locking tab with the support closed
Figure 20.- Detail of the discontinuous groove of the internal chamber and locking tab with the support open
Figures 21 and 22.- Perspective views at different angles of a variant of the support in its automatic system with a leg or strip in a vertical position as a locking element/mechanism.
Figure 23.- Perspective view of the support in use with a test tube in the closed position
Figure 24.- Perspective view of the support in use with a wrench in the open position
Figure 25.- Perspective view of the support in use with a carabiner in the open position
Figure 26.- Perspective view of the support with a door in the closed position in its semi-automatic system version
Figure 27.- Top view of the support with a door in the closed position
Figure 28.- Perspective view of the support with a door in the open position
Figure 29.- Top view of the support with a door in the open position
Figure 30.- Exploded view of the support with semi-automatic system
Figure 31.- Detailed view of the support and its release mechanism with spring and with the door closed
Figure 32.- Detailed view of the support and its release mechanism with spring and door closed
Figure 33.- Frontal detailed cut of the support with release mechanism with flexible ring and open door
Figure 34.- Lateral view of the support with release mechanism with flexible ring
Figure 35- Frontal detailed cut of the support with release mechanism with strip and open door
Figure 36.- Lateral view of the support with release mechanism with strip
Figure 37.- Perspective view of the support with release mechanism with strip and closed door
Figure 38.- Perspective view of the support with triggering mechanism of the release mechanism in the frontal position with the closed door
Figure 39.- Top view of the support with triggering mechanism of the release mechanism in the bottom position with the closed door
Figure 40.- Schematic view of alternative locking system
Figure 41.- Perspective view of the support in use in its semi-automatic version with an axe in the closed position
Figure 42.- Frontal perspective view of the support in use in its semi-automatic version adapted to the shape of the object it holds - an axe - in the closed position
Figure 43.- Side view of the support in use in its semi-automatic version adapted to the shape of the object it holds - an axe - in the closed position
Figure 44.- Detailed perspective view of the support in use in its semi-automatic version adapted to the shape of the object it holds - an axe - in the closed position
Figure 45.- Perspective view of the support in use with a climbing cam in the closed position
Figure 46.- Perspective view of the support in use with a laboratory flask in the closed position
Figure 47.- Perspective view of the support in use with an Erlenmeyer flask in the closed position

### Explanations of the drawings and embodiments presented

According to these drawings, the object of this invention is a quick-opening support designed to accommodate tools, utensils, or claimed objects.

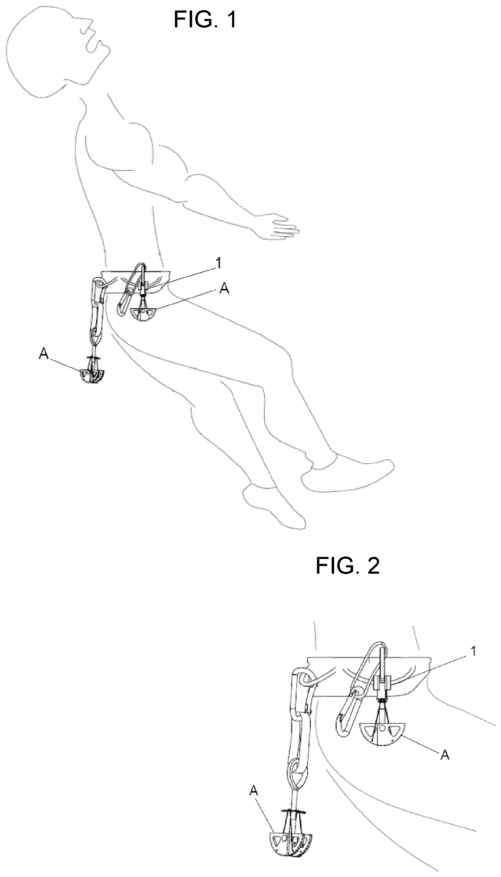

In Figures 1 and 2, a comparison is shown between a camming device (A) inserted into the new support (1) and another identical one (A) hung in the traditional way on a belt using a carabiner and a strap. With the quick-opening support, it is sufficient to grab the camming device and pull it for the support casing to open, releasing the tool. There is no need to manipulate the carabiner, which poses a risk as it diverts the subject's attention even if minimally from the climbing point where they are to grab the camming device.

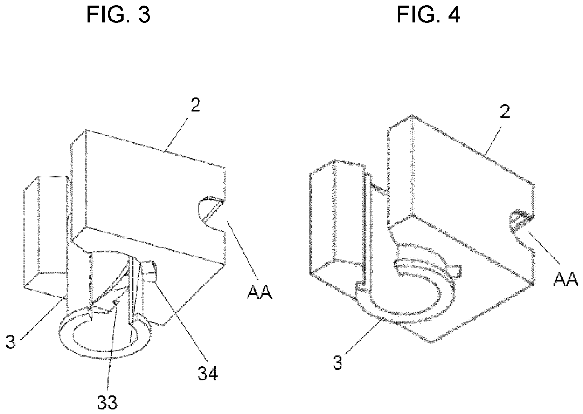

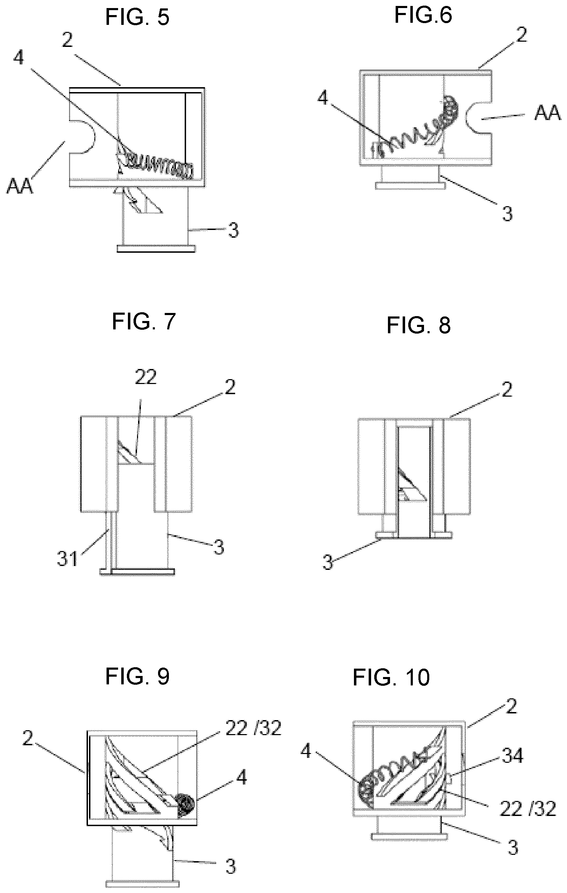

Figures 3 to 10 illustrate the configuration of the support and the operation and travel of the object release mechanism. The support comprises an external casing (2) containing a tubular internal chamber (3). The external casing has continuous slots (22) on its inner perimeter, and the internal chamber has a slot (32) on its perimeter, in this case, a discontinuous slot in part of its length, with arched segments facing each other, forming a locking tooth (33) in this example. The internal chamber (3) also has toothed projections (34) on its perimeter or exterior, which protrude from it and slide through the continuous slots (22) of the casing, acting as a guide for the rotational travel that the internal chamber (3) makes inside the external casing (2). A resilient locking tab (23) protruding from the external casing (2), directed towards the interior of the circular perimeter, articulates with the discontinuous slot (32) of the internal chamber (3), sliding through it. When this tab (23) reaches the point of the discontinuous sections of it, it engages and remains connected and locked with the locking tooth (33) of its discontinuous section (32), stopping the rotational backward movement of the internal chamber (3), leaving the system locked and open to remove the object from the inside. Structurally, due to its elasticity, this protruding locking tab (23) has a certain movement that allows it to slide, bend, engage with the locking tooth (33), and hide behind the peripheral wall of the internal chamber (3) to return to its initial closed position.

Thus, these discontinuous sections of the slot (32) determine the blocking of the travel of the internal chamber (3), and this discontinuity is precisely what facilitates the blocking because its locking tooth (33) engages with the protruding locking tab (23) of the external casing (2), stopping the rotational backward movement and retaining the internal chamber (3) in the open position, at which point the object is released.

This upward movement is achieved when the subject grabs the object (not drawn) partially inserted into the internal chamber (3) and presses it, so that this pressure is transmitted as upward force on the internal chamber (3), initiating its travel until the previously described point where the locking tooth (33) of the discontinuous slot (32) and the resilient locking tab (23) engage, and the lateral openings of the external casing (2) and the internal chamber (3) coincide.

With this sequence, the support goes from a closed position (Figure 3) where the object is immobilized to an open position (Figure 4) where the object is released.

The support incorporates a driving spring (4) that allows the internal chamber (3) to return to its initial position and close the system if pressure continues and the lock point between the protruding elastic tab (23) of locking and the tooth (33) of the aforementioned locking is passed. With this pressure, the locking tab, elastic, deforms and disengages from the locking tooth, allowing the spring (4) to act. This driving spring (4), located inside the casing (2), is anchored to it at one end and to a toothed projection (34) of the internal chamber (3) at the other end.

These figures show the sequence of the transition from closed (figures 4, 6, 8, and 10) to open (figures 3, 5, 7, and 9) in comparative planes.

In Figures 3, 4, 5, and 6, there is also a housing (AA) at any point on its outer perimeter suitable for attachment to a fastening point, in this example, to a belt, as shown in Figure 1.

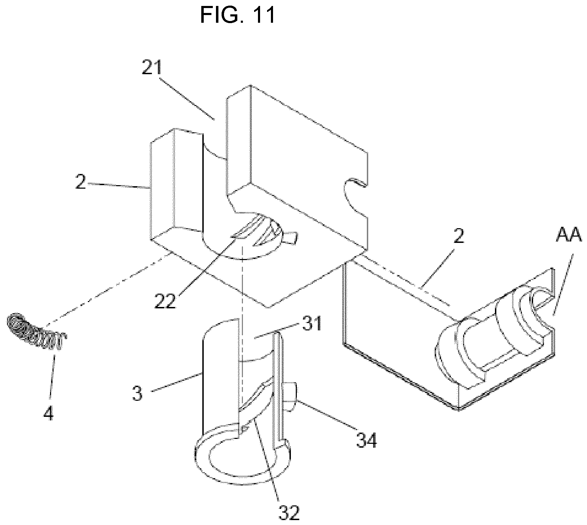

In Figure 11, an exploded view of the support with an automatic opening and closing system is shown, i.e., without the subject having to manipulate it at any time. The casing, with several continuous slots (22) on its inner perimeter, has a central cavity where the internal chamber (3), tubular, is housed. This internal chamber (3) has a discontinuous slot (32) in a section located on its perimeter. This internal chamber (3) moves in an upward rotational motion when it receives the force or push of the pressure exerted on the partially inserted object (not drawn). A driving spring (4) facilitates the return of the internal chamber (3) to its initial position, closing the support. In this exploded view in Figure 11, the rear part of the casing (2) with the housing (AA) suitable for adjustment with a fastening means is shown.

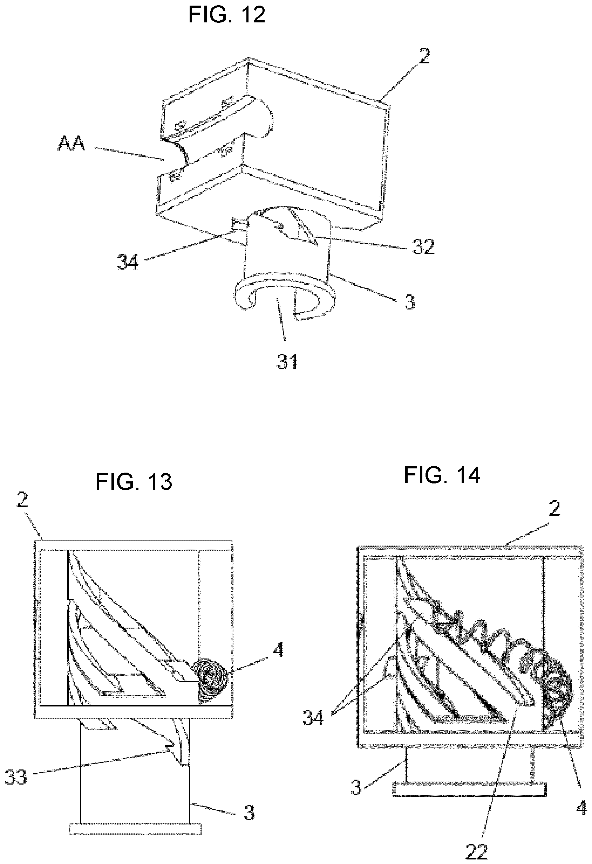

Figure 12 shows a perspective view of the support in the closed position, while Figures 13 and 14 show respective cuts that allow seeing the internal release mechanism, with the support in the closed position (Figure 13) and open position (Figure 14), with the discontinuous slot (32) as a stop for the protruding locking tab (23). In Figures 12 and 14, the detail of the toothed projections (34) of the internal chamber (3) is visible, which either serves to hold the closing driving spring (4) or to guide its travel inside the external casing (2).

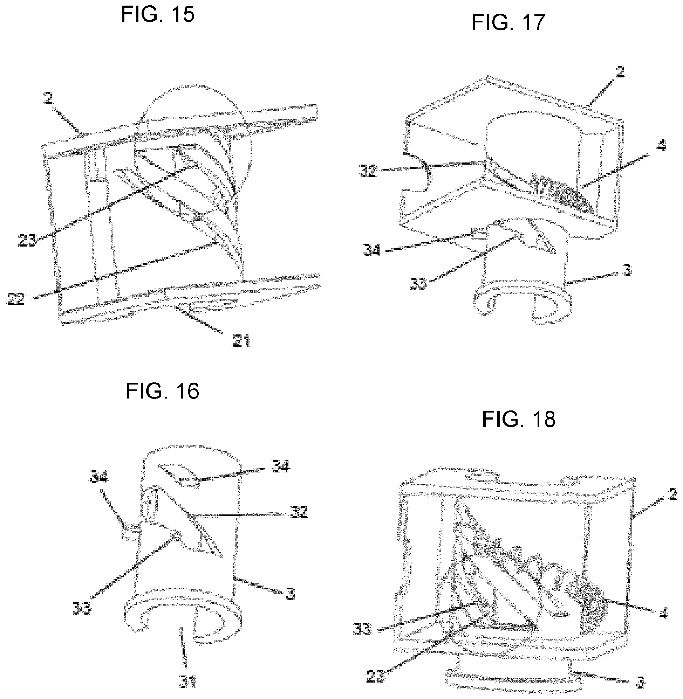

Figure 15 shows in detail one of the continuous slots (22) of the external casing (2) with the resilient locking tab (23), the discontinuous slot or locking stop located in the slot of the internal chamber (3), shown in Figure 17 and 18. Figure 16 shows in detail the discontinuous slot (32) on the perimeter of the internal chamber (3), designed precisely to allow the sliding of the resilient locking tab (23) as well as toothed projections (34) that guide its travel in the external casing (2).

In Figures 17 and 18, in addition to the elastic locking tab (23) and the discontinuous slot (32) for locking, the compressed driving spring (4) is shown in the closed position (Figure 17) and extended (Figure 18) when the support goes from the mechanism with the closed position to the open position.

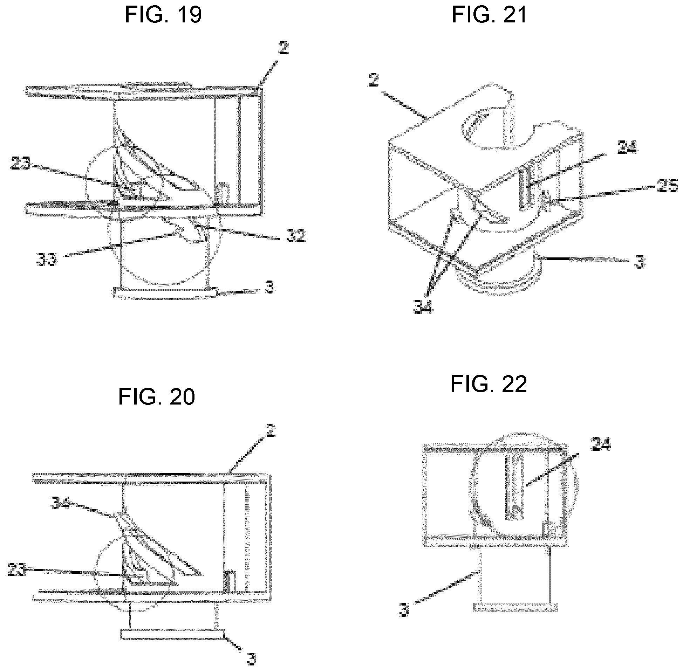

In Figures 19 and 20, the detail of the locking mechanism that stops the rotational travel of the internal chamber (3) is shown, which occurs when the locking tooth (33) in the discontinuous slot (32) engages with the resilient protruding locking tab (23) in the external casing (2). In Figure 19, both elements are separated, so the support is closed, and the object is immobilized. Meanwhile, in Figure 20, both elements are engaged, the support is open, and the object is released.

In Figures 21 and 22, an alternative embodiment of the locking tab for the travel of the internal chamber (3) is shown, which in this case is shaped like a vertical hook (24). The anchoring (25) of the external casing (2) to fix one end of the driving spring (4), whose other end is fixed to one of the toothed projections (34) of the internal chamber (3), is also visible.

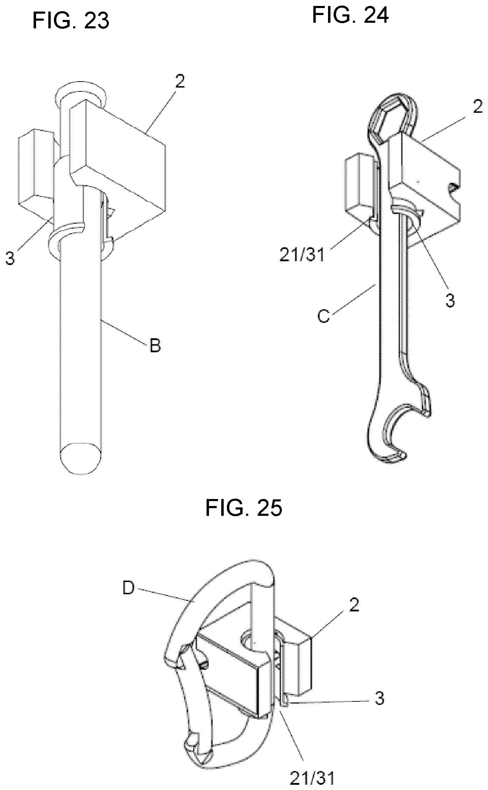

In Figures 23, 24, and 25, examples of the use of the support with different objects are shown: a test tube (B), with the support in the closed position (Figure 23), and a wrench (C) and a carabiner (D) with the support in the open position (Figures 24 and 25), showing in the latter the coincidence of the longitudinal openings (21) (31) of the external casing (2) and the internal chamber (3) that allows the opening of the support and the extraction of the object.

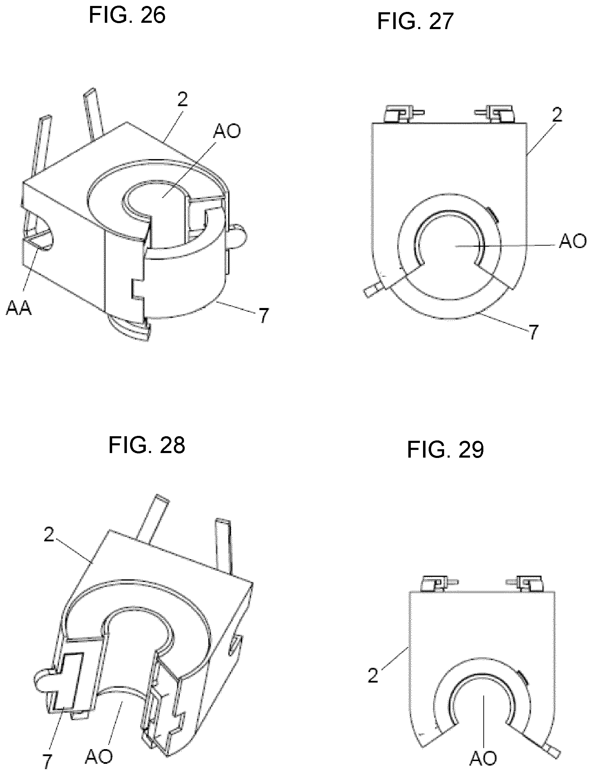

In Figures 26 to 29, a comparison of the support in its configuration with a semi-automatic system, that is, with automatic opening and manual closing, in the closed position (Figures 26 and 27) and open position (Figures 28 and 29) is shown.

In this example, the external casing (2) directly contains the object, and the area (AO) intended for it is shown. Similar to the automatic system, it has a housing (AA) on its rear part to allow attachment to a fastening point, for example, a harness, this time with visible fastening straps. Unlike the other system, the access point to remove the object is defined in a closing element acting as a door (7), which moves with a circular, linear, or pivotal backward or forward movement. The opening is automatic thanks to the releasing mechanism, and the closing is manual.

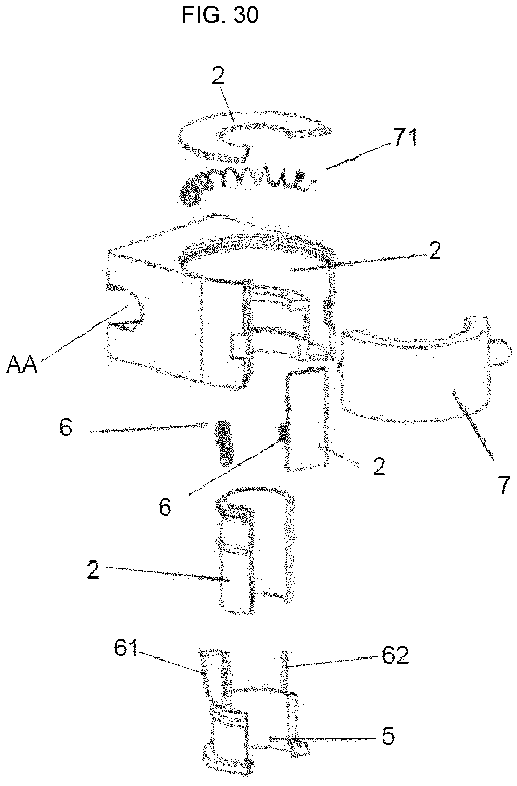

In Figure 30, the support with a semi-automatic system is shown in an exploded view with the aforementioned complementary elements - straps, housing (AA) for the harness and with the external casing (2) and its access door (7) and handle for closure. The trigger (5) of the release mechanism, linked to the door (7) by means of linear, circular, or pivotal elastic displacement elements, with these elastic means or springs ensuring their return to their initial position, as well as the wedge or locking device (61) for the door (7), ensuring that the system is locked. Typically, springs (6) are used for the return of the trigger, inserted into housings (62) and related to guides that accompany its travel. Also, the trigger (5) has a wedge or locking device (61) that is what causes the door to lock. The entire release mechanism is hidden inside the external casing (2), while the elastic element propelling the opening of the door is, in this image, a spring (71) that is attached at one end to the door (7) and at the other to the casing. This spring (71) is the propeller for the opening of the door (7).

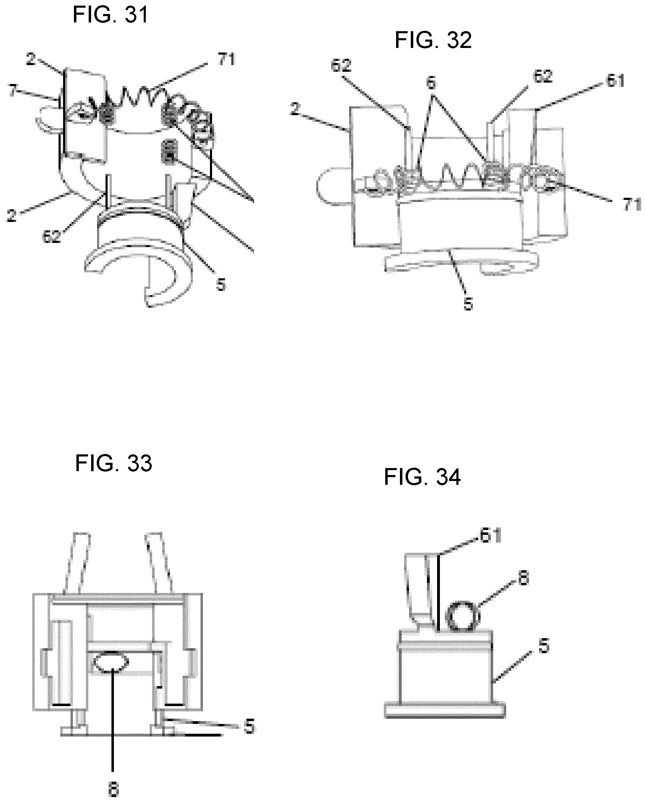

In Figures 31 and 32, the detail of the releasing mechanism with the propelling spring (71) for the quick opening of the door (7) is shown, one end of which is attached to the external casing (2), and the other to the door, which remains closed by the wedge or locking device (61), in turn related to the trigger (5).

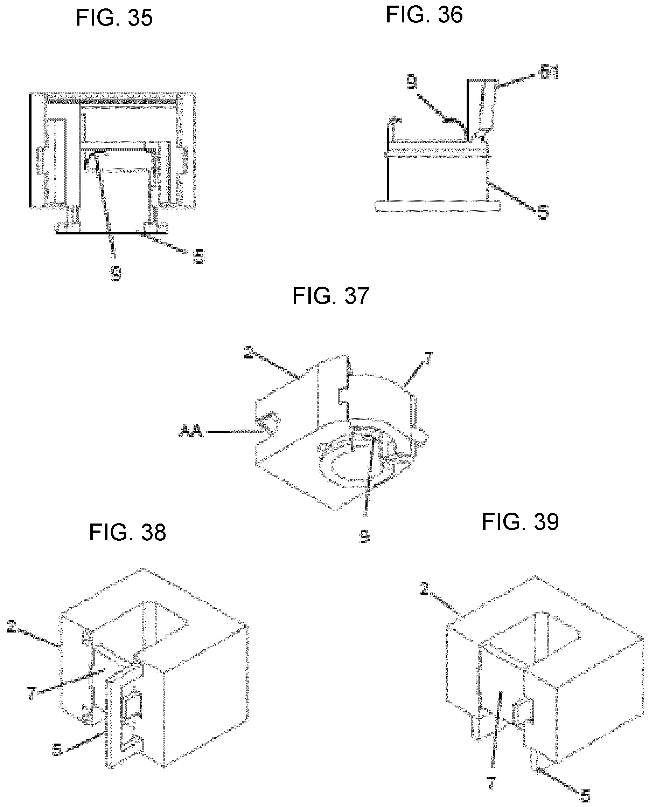

In Figures 33 to 37, various embodiments are shown in which the elastic means or springs ensuring the return of the trigger (5) of the releasing mechanism are at least one spherical or elliptical ring (8) in Figures 33 and 34 and at least one strip (9) in Figures 35, 36, and 37.

In Figures 38 and 39, examples of placement of the trigger of the releasing mechanism in the frontal position with the door closed (Figure 38) or below (Figure 39) are shown.

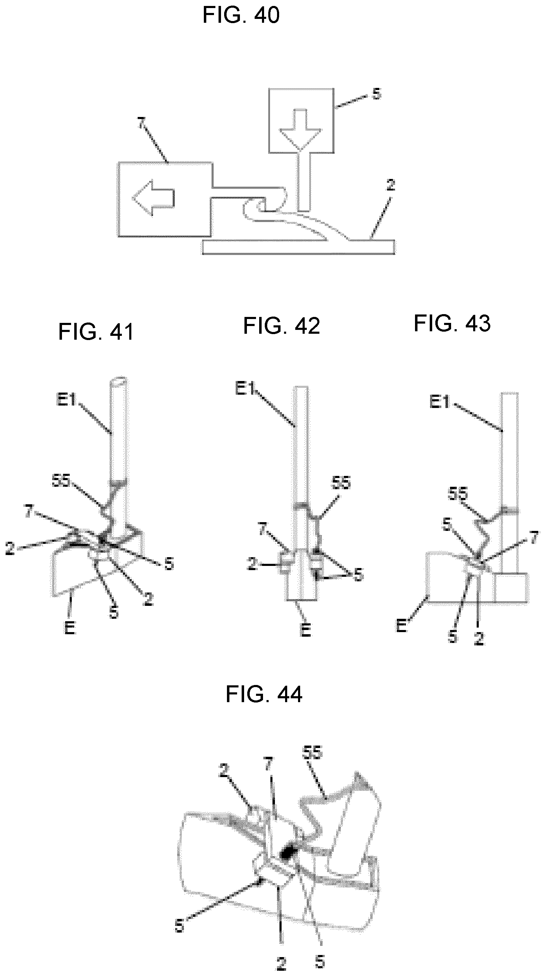

In Figure 40, a schematic view of an alternative locking system is shown in which the trigger acts on the locking system and releases the closure.

In the description of the automatic and semi-automatic systems, the presence of a driving spring (4) and springs (71) that decisively intervene in the operation of the claimed support has been mentioned. As a summary, it should be noted that although both springs are technically the same, they differ significantly in the function they perform.

In the automatic system, the spring (4) acts as a closing drive for the support, being in a relaxed position when closed, i.e., the internal chamber (3) has not started its travel and moving to a tensioned position when it reaches the end of its travel. In other words, it receives the pressure exerted on the object and transferred to the internal chamber (3) and becomes tense.

In the semi-automatic system, the spring (71) acts as a propellant for the opening of the door and, therefore, the support since it acts on the door (7), always being tensioned and releasing that tension when the trigger and, consequently, opening the door (7). Since the closure of the support in this semi-automatic system is manual, when the subject grabs the handle (11) of the door (7) and brings it to its closed position, the spring is tensioned again.

In figures 41, 42, 43, and 44, an explicit embodiment is shown in which the support (1) takes on a specific conformation adapted to the morphology of the object to be secured and transformed, in this example, an axe (E). In these figures, the object, namely the axe (E), is securely held in the support, inserted into the external casing (2), by its blade.

The trigger (5), developed in this example as a pin, is connected by a cord (55) to the handle (E1) of the axe (E) and secures the door or cover (7) of the external casing (2), keeping it closed. When the user grabs and pulls the axe (E) by its handle (E1), the trigger (5) is immediately dragged in its pin-like version, causing the door (7) of the external casing (2) to become free, pivoting and creating the opening for extracting the section of the axe (E) that is trapped in the external casing (2).

The door (7) that closes the support and the trigger (5) that activates the release and opening mechanism of the external casing (2), as fundamental and essential elements constituting the basis of the support, can be located in different areas of the external casing (2) precisely according to the needs and configuration of the object for the sake of increased safety, comfort, and ease of use for both the support and the object in question.

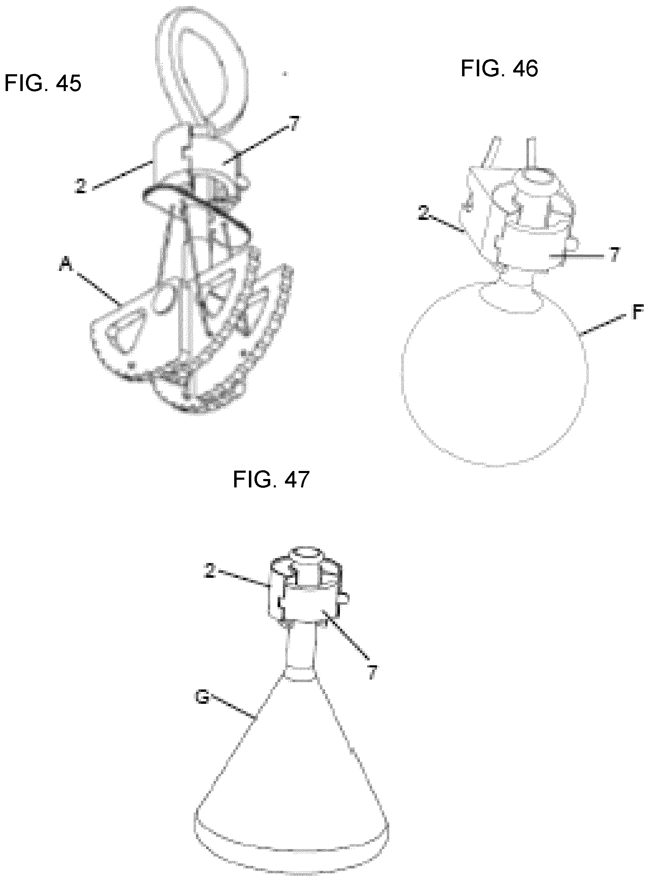

In figures 45, 46, and 47, examples of using the support with a semi-automatic system are shown with different objects: a fissure (A), a laboratory ball (F), and an Erlenmeyer flask (G), all with the support in the closed position.

In view of the described details, the simplicity of the portable quick-opening support for accommodating tools, utensils, or objects claimed is evident, both in its structure and its operation.

It is a portable support for storing and transporting tools, utensils, or objects, to subsequently facilitate the user in grabbing them easily, quickly, and intuitively. These tools, utensils, or objects are partially housed inside according to their morphology and can only be released, i.e., extracted from their housing, with a specific pressing movement performed by the user, transmitted by the tool or object to the releasing mechanism that opens the casing and allows the extraction of said tools, utensils, or objects.

Its design particularly addresses the needs evident in mountain activities, such as climbing, where the climber's attention is entirely focused on progress and usually fumbles for the necessary equipment - fissures, friends, knives, etc. Typically, when picking them up, one is forced to disengage and manipulate them correctly, which consumes valuable time and poses a clear risk of falling and losing them. With this innovative support, simply grabbing the object and releasing it puts it in the correct position for use, significantly reducing the time spent handling it, saving effort, and increasing climber safety. Additionally, being a compact piece, regardless of the geometric shape of the casing, it is adjustable to belts, harnesses, etc.

Moreover, it is suitable for use in other fields of work that require quick and precise manipulation of objects or instruments, for example, in the surgical sector or laboratories. In this case, for instance, the support is linked, through various means, to shelves or other suitable points for quick and organized access.

It is also adaptable as a support or holder in other areas where a variety of tools are commonly used and manipulated and need to be organized, such as in the kitchen, an office, a shop, etc.

As mentioned before, in the design of each model of the claimed support, in the semi-automatic system, it is important to position the trigger in a secure position to avoid risks of entanglement, for example, with climbing equipment, which could cause the accidental opening of the door. This position is not always the same, and the trigger can vary in location and technical configuration according to usage needs and the specific configuration of the object to be secured/transported.

Also, in this semi-automatic system, optionally, the trigger can respond to manual pressure exerted on a triggering medium, for example, a button in any of its possible embodiments. In the example presented in the previous figures where the object to be secured is an axe, this trigger, shaped like a pin, is activated by pulling the cord, understood as a manual activation triggering medium.

Therefore, this semi-automatic system, understood as a second embodiment, has a variety of options to define its final and most suitable configuration.

Regarding manufacturing, the quick-opening support for accommodating tools, utensils, or objects, in its entirety or in some of its parts, can combine various materials: metal, plastic, etc.

It is not considered necessary to extend this description further for any expert in the field to understand the scope of the invention and the advantages derived from it. The materials, shape, size, and arrangement of the elements are subject to variation as long as it does not alter the essential nature of the invention. The terms in which this specification has been drafted should always be taken broadly and not restrictively.

## Claims

1. st Quick-opening portable support for housing tools, gadgets or objects, essentially **characterized in that** it comprises an external casing (2) intended to directly or indirectly house a section of an object, which is immobilized in its position, and a releasing mechanism that controls the rotary, linear, circular or pivoting movement of a closing or securing part of the assembly, said mechanism being activated by the pressure exerted on the object, such indirect pressure being translated into force and transmitted to said releasing mechanism by the object itself.

2. nd Quick-opening portable support for housing tools, gadgets or objects, according to the 1st claim, **characterized in that** the rotary movement of the releasing mechanism is bidirectional, ascending and descending, opening in one direction and closing in the opposite.

3. rd Quick-opening portable support for housing tools, gadgets or objects, according to the 1st claim, **characterized in that** the force exerted by the object on the support (1) to be released is contrary or inverse to gravity.

4. th Quick-opening portable support for housing tools, gadgets or objects, according to the 1 st and 2nd claims, **characterized in that** the support acts with an automatic system in which the external casing (2) houses the object indirectly, forming itself as a container containing a tubular internal chamber (3) that houses a morphologically appropriate section of the object, the rest of the chamber (3) protruding, the rotary movement of said internal chamber (3) within the external casing (2) intervening in the releasing mechanism..

5. th Quick-opening portable support for housing tools, gadgets or objects, according to the 1st and 4th claims, **characterized in that** the external casing (2) is made up of a box structure with a tubular interior, the entire casing and interior, open in part at both ends and partly along a longitudinal section of its wall that forms an opening (21), delimiting a space to house the internal chamber (3), presenting this external casing (2) in its tubular interior, several continuous slots (22) in its wall, some to accommodate toothed projections (34) present in the internal chamber (3) and another slot that forms an element like a strap or leg and that at its final free end draws a tab elastic protrusion locking (23) directed towards the interior of the circular perimeter.

6. th Quick-opening portable support for housing tools, gadgets or objects according to the 1st, 4th and 5th claims, **characterized in that** the internal chamber (3) is open at its ends and with a longitudinal cut of its perimeter wall that forms an opening (31), presenting in the rest of its perimeter wall a slot (32) with a discontinuous section drawn by arcuate segments with their curves facing each other forming at least one locking tooth (33), with the toothed projections (34) directed towards the outside the circular perimeter.

7. th Quick-opening portable support for housing tools, gadgets or objects, according to the 5th and 6th claims, **characterized in that** the toothed projections (34) of the internal chamber (3) slide through at least one of the continuous slots (22) of the external casing (2) as a guide for the rotary path that the internal chamber (3) makes inside the external casing (2).

8. th Quick-opening portable support for housing tools, gadgets or objects, according to the 5th and 6th claims, **characterized in that** the protruding locking tab (23) articulates with the discontinuous groove (32) of the internal chamber (3), remaining connected and locked with the locking tooth (33) located in the discontinuous section thereof, retaining the internal chamber (3) in the open position and leaving the longitudinal openings of the casing (2) and matching internal chamber (3) and the support (1) open.

9. th Quick-opening portable support for housing tools, gadgets or objects, according to the 5th and 6th claims, **characterized in that** the external casing (2) incorporating a spring (4) return impeller of the internal chamber (3) to its initial position that is triggered when the protruding locking tab is deformed (23) and unlock the locking tooth (33) that is defined in the discontinuous section of the slot (32) of the internal chamber (3).

10. th Quick-opening portable support for housing tools, gadgets or objects, according to the 5th and 6th claims, **characterized in that** the protruding locking tab (23) of the path of the internal chamber (3) is shaped like a vertical hook (24).

11. th portable quick-opening support for housing tools, tools or objects, according to the 1st claim, **characterized in that** the support acts with a semi-automatic system in which the external casing (2) directly houses the object in a designated space or area (AO). to the same or indirectly when it incorporates a movable interior piece to contain said object, the releasing mechanism acting on a closing element like a door (7) that moves with a circular, linear or pivoting backward or forward movement, being automatic opening thanks to the releasing mechanism and manual closing.

12. th portable quick-opening support for housing tools, tools or objects, according to the 11th claim, **characterized in that** to release the object, the external casing (2) incorporates a firing trigger (5) linked to the door (7) that acts through mechanical systems, whether automatic or manual.

13. th portable quick-opening support to house tools, tools or objects, according to the 12th claim, **characterized in that** the automatic mechanical systems are elastic means or elements of linear, circular or pivoting movement that, when said firing pin trigger (5) is fired and unlock them , propel the automatic opening of said door (7) upon unlocking a locking wedge (61) that locks it and to which it is linked.

14. th portable quick-opening support to house tools, tools or objects, according to the 12th claim, **characterized in that** the elastic propelling element for opening the door (7) is a spring (71) that It is attached at one end to the door (7) and at the other end to the external casing (2).

15. th portable quick-opening support to house tools, tools or objects, according to the 12th claim, **characterized in that** the firing pin trigger (5) being attached at its base by elastic means to return to its initial position.

16. th portable quick-opening support to house tools, tools or objects, according to the 15th claim, **characterized in that** the elastic return means of the firing pin trigger (5) are springs (6) inserted in housings (62) and related to guides that accompany their travel, hidden by the cover.

17. th portable quick-opening support to house tools, tools or objects, according to the 15th claim, **characterized in that** the elastic return means of the firing pin trigger (5) are at least one strap (9)

18. th portable quick-opening support to house tools, tools or objects, according to the 15th claim, **characterized in that** the elastic return means of the firing pin trigger (5) are at least one ring spherical or elliptical (8)

19. th portable quick-opening support to house tools, tools or objects, according to the 15th claim, **characterized in that** the elastic return means of the firing pin trigger (5) are at least one corrugated sheet.

20. th portable quick-opening support to house tools, tools or objects, according to the 15th claim, **characterized in that** the elastic return means of the firing pin trigger (5) are at least a plastic extension in the shape of an inclined leg

21. st portable quick-opening support to house tools, tools or objects, according to the 15th claim, **characterized in that** the elastic return means of the firing pin trigger (5) are at least one cord (55).

22. nd Quick-opening portable support for housing tools, gadgets or objects, according to the 13th claim, **characterized in that** the manual mechanical systems are specified in at least one wedge

23. rd Quick-opening portable support for housing tools, gadgets or objects, according to the 13th claim, **characterized in that** the manual mechanical systems are specified in at least one rope.

24. th Quick-opening portable support for housing tools, gadgets or objects, according to the 11th and 12th claims, **characterized in that** both the closing element or door (7) and the striker trigger (5) releasing the lock are located in any area of the external casing (2).

25. th Quick-opening portable support for housing tools, gadgets or objects, according to the 1st claim, **characterized in that** externally the external casing (2) adopts any geometric conformation.

26. th Quick-opening portable support for housing tools, gadgets or objects according to the 1st claim, **characterized in that** the external casing (2) has a housing (AA) at any point on its outer perimeter suitable for attachment to a hooking point.

27. th Quick-opening portable support for housing tools, gadgets or objects, according to the 4th claim, **characterized in that** in the automatic system, the internal chamber (3) is always circular in shape when performing a rotating movement inside the external casing (2).

28. th Quick-opening portable support for housing tools, gadgets or objects, according to the 11th claim, **characterized in that** in the semi-automatic system, the internal housing (AO) of the external casing (2) intended to locate the object is formed according to the morphology of said object.
